# EUROPEAN PATENT APPLICATION

(11) **EP 4 682 683 A1**
(43) Date of publication of application: **21.01.2026**
(21) Application number: 25187671.0
(22) Date of filing: 04.07.2025
(51) Int. Cl.: G06F 3/01, B60K 35/00

(54) **INTELLIGENT SOFTWARE DEVELOPMENT KIT FRAMEWORK FOR ADVANCED MOTION STABILIZATION**

(30) Priority: 18.07.2024 IN 202411054942; 21.10.2024 US 202418922093
(71) Applicant: HONEYWELL INTERNATIONAL INC., Charlotte, NC 28202 (US)
(72) Inventor: J, Kirupakar, Charlotte, 28202 (US); KHAN, Kalimulla, Charlotte, 28202 (US); RAJENDRAN, Ramkumar, Charlotte, 28202 (US); LEIPHON, Kenneth M, Charlotte, 28202 (US); KAMATH, Mythili Belle, Charlotte, 28202 (US)
(74) Representative: Haseltine Lake Kempner LLP

(57) **Abstract**

Embodiments of the present disclosure provide motion stabilization software development kit and framework. An example motion stabilization software development kit may include a hardware layer that includes a first set of one or more sensors configured for generating device motion data for a display device within a vehicle and a second set of one or more sensors configured for generating vehicle motion data for the vehicle. The example motion stabilization software development kit may include an API layer that includes one or more APIs and an application layer that includes one or more applications communicatively coupled to the first and second set of one or more sensors. The example motion stabilization software development kit may include a software development kit abstraction layer that includes a motion stabilization model configured to adjust a position of an object on a screen of the display device.

## Description

### CROSS-REFERENCE TO RELATED APPLICATIONS

This application claims the benefit of U.S. Provisional Patent Application No. 63/593,860, filed October 27, 2023 and India Provisional Patent Application No. 202411054942, filed July 18, 2024, the entire contents of which are incorporated by reference herein.

### TECHNOLOGICAL FIELD

The present disclosure relate to motion stabilization. Example embodiments provide an intelligent software development kit framework for advanced motion stabilization.

### BACKGROUND

Various embodiments of the present disclosure address technical challenges related to mobile stabilizations in displays. Through applied effort, ingenuity, and innovation, Applicant has solved problems related to motion stabilization, by developing solutions embodied in the present disclosure, which are described in detail below.

### BRIEF SUMMARY

In general, embodiments of the present disclosure provide intelligent software development kit framework for advanced motion stabilization. In accordance with one aspect of the present disclosure a motion stabilization software development kit is provided. In some example embodiments, the motion stabilization software development kit comprises an hardware layer comprising a first set of one or more sensors configured for generating device motion data for a display device within a vehicle; and a second set of one or more sensors configured for generating vehicle motion data for the vehicle; an API layer comprising one or more APIs; an application layer comprising one or more applications, the application layer communicatively coupled to the first set of one or more sensors and the second set of one or more sensors via at least a portion of the one or more APIs; and a software development kit abstraction layer comprising a motion stabilization model configured to adjust a position of an object on a screen of the display device based on the device motion data and the vehicle motion data to account for screen motion of the display device and eye motion of a user relative to each other in the vehicle.

In some embodiments, the one or more applications comprise a user application, wherein the motion stabilization software development kit is configured for integration with the user applications to enable implementation of the motion stabilization model with respect to the user application.

In some embodiments, the one or more APIs comprise a sensor data API and a motion stabilization API.

In some embodiments, the software development kit abstraction layer further comprises a sensor interface module, wherein the sensor interface module is configured to (i) receive the device motion data from the first set of one or more sensors, (ii) receive the vehicle motion data from the second set of one or more sensors, and (iii) provide the device motion data and the vehicle motion data, directly or indirectly, to the motion stabilization model.

In some embodiments, the sensor interface module is further configured to provide, directly or indirectly, one or more of the device motion data or the vehicle motion data for rendering on a user interface.

In some embodiments, the first set of one or more sensors comprise one or more of an accelerometer or a gyroscope.

In some embodiments, the motion stabilization model is configured to adjust the position of the object on the screen of the display device by generating predicted gaze position deviation data based on the device motion data and vehicle motion data, wherein the predicted gaze position deviation data comprises estimated position change of a gaze of the eye of a user on the screen of the display device; generating predicted device position deviation data based on the device motion data, wherein the predicted device position deviation data comprises estimated position change of the display device; and adjusting the position of the object on the screen of the display device based on the predicted gaze position deviation data and the predicted device position deviation data.

In some embodiments, the device motion data comprises one or more of (i) device acceleration motion or (ii) device angular motion.

In some embodiments, the vehicle motion data comprises one or more of (i) vehicle acceleration motion or (ii) vehicle angular motion.

In accordance with another aspect of the present disclosure a computing system comprising a motion stabilization software development kit is provided. In some example embodiments, the motion stabilization software development kit, comprises an hardware layer comprising a first set of one or more sensors configured for generating device motion data for a display device within a vehicle; and a second set of one or more sensors configured for generating vehicle motion data for the vehicle; an API layer comprising one or more APIs; an application layer comprising one or more applications, the application layer communicatively coupled to the first set of one or more sensors and the second set of one or more sensors via at least a portion of the one or more APIs; and a software development kit abstraction layer comprising a motion stabilization model configured to adjust a position of an object on a screen of the display device based on the device motion data and the vehicle motion data to account for screen motion of the display device and eye motion of a user relative to each other in the vehicle.

In some embodiments, the one or more applications comprise a user application, wherein the motion stabilization software development kit is configured for integration with the user application to enable implementation of the motion stabilization model with respect to the user application.

In some embodiments, the one or more APIs comprise a sensor data API and a motion stabilization API.

In some embodiments, the software development kit abstraction layer further comprises a sensor interface module, wherein the sensor interface module is configured to (i) receive the device motion data from the first set of one or more sensors, (ii) receive the vehicle motion data from the second set of one or more sensors, and (iii) provide the device motion data and the vehicle motion data, directly or indirectly, to the motion stabilization model.

In some embodiments, the sensor interface module is further configured to provide, directly or indirectly, one or more of the device motion data or the vehicle motion data for rendering on a user interface.

In some embodiments, the first set of one or more sensors comprise one or more of an accelerometer or a gyroscope.

In some embodiments, the motion stabilization model is configured to adjust the position of the object on the screen of the display device by generating predicted gaze position deviation data based on the device motion data and vehicle motion data, wherein the predicted gaze position deviation data comprises estimated position change of a gaze of the eye of a user on the screen of the display device; generating predicted device position deviation data based on the device motion data, wherein the predicted device position deviation data comprises estimated position change of the display device; and adjusting the position of the object on the screen of the display device based on the predicted gaze position deviation data and the predicted device position deviation data.

In some embodiments, the device motion data comprises one or more of (i) device acceleration motion or (ii) device angular motion.

In some embodiments, the vehicle motion data comprises one or more of (i) vehicle acceleration motion or (ii) vehicle angular motion.

In accordance with another aspect of the present disclosure, one or more non-transitory computer-readable storage media comprising a motion stabilization software development kit is provided. In some example embodiments, the motion stabilization software development kit comprises an hardware layer comprising a first set of one or more sensors configured for generating device motion data for a display device within a vehicle; and a second set of one or more sensors configured for generating vehicle motion data for the vehicle; an API layer comprising one or more APIs; an application layer comprising one or more applications, the application layer communicatively coupled to the first set of one or more sensors and the second set of one or more sensors via at least a portion of the one or more APIs; and a software development kit abstraction layer comprising a motion stabilization model configured to adjust a position of an object on a screen of the display device based on the device motion data and the vehicle motion data to account for screen motion of the display device and eye motion of a user relative to each other in the vehicle.

In some embodiments, the one or more applications comprise a user application, wherein the motion stabilization software development kit is configured for integration with the user application to enable implementation of the motion stabilization model with respect to the user application.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1A shows an example system environment 100 within which at least some embodiments of the present disclosure may operate.
FIG. 1B provides a block diagram of an example motion stabilization software development kit architecture in accordance with at least one example embodiment of the present disclosure.
FIG. 2 provides an example motion stabilization user interface in accordance with at least one example embodiment of the present disclosure.
FIG. 3 provides an example data visualization user interface in accordance with at least one example embodiment of the present disclosure.
FIG. 4 provides a block diagram of an example motion stabilization software development kit package in accordance with at least one example embodiment of the present disclosure.
FIG. 5 provides an example apparatus in accordance with at least one example embodiment of the present disclosure.
FIG. 6 provides an example visualization of example applications of motion stabilization software development kit in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

### Overview and Technical Improvements

Example embodiments disclosed herein address technical challenges associated with motion stabilization, particularly motion stabilization in display devices used in moving vehicles such as for example aircrafts. As would be understood by one skilled in the field to which this disclosure pertains, there are numerous applications, domains, environments, and scenarios in which motion stabilization systems are desirable including, but not limited to, avionics domain. Motion stabilization systems provide various advantages including, but not limited to enhancing safety by ensuring important information remains legible on a display device while the vehicle is in motion, thereby reducing driver distraction. By way of example, motion stabilization systems in avionics domain reduces the likelihood of a pilot being distracted from focusing excessively on a display device to read information on the display device due to ineligibility of the information on the display device (e.g., effect of motion with respect to the display device). In addition, motion stabilization systems provide for readability of information on display devices on bumpy roads or during rapid movements, ensuring that navigation, speed, and alert messages are consistently clear. Furthermore, motion stabilization systems improve user experience by providing smooth and stable visuals, which are essential for both comfort and usability. In this regard, motional stabilization facilitates and enhances driver confidence, as well as enhances the overall functionality of a vehicle's infotainment and navigation systems. In some examples, advanced stabilization technologies, such as gyroscopic sensors and adaptive algorithms may be leveraged to minimize the effects of motion, leading to more reliable and accurate display performance.

Example embodiments, provide systems, apparatuses, methods, and computer program products relating to motion stabilization modeling algorithms, motion stabilization software development kit (SDK) framework (e.g., SDK framework for motion stabilization modeling algorithms), and motion stabilization software development kit (e.g., SDK for motion stabilization modeling algorithms). In particular some example embodiments provide systems, apparatuses, methods, and computer program products for intelligent software development kit for advanced motion stabilization systems.

Example embodiments from a motion stabilization SDK that includes motion stabilization modeling algorithms. Example motion stabilization modeling algorithms according to embodiments of the present disclosure may be configured to improve the legibility of a moving screen (e.g., moving screen of a device display) by moving the image in synchronization with the user's gaze. An example stabilization modeling algorithm according to embodiments of the present disclosure may be configured to sense the screen's motion and render an image which is an inverse of the sensed motion such that when the image is displayed on the moving screen, the image is space stabilized to prevent the motion and retina blur associated with moving electronic screens. Further, example stabilization modeling algorithm according to embodiments of the present disclosure may be configured to re-map touch zones on the screen of the device display based on the sensed motion, such that the touch zone is space stabilized as well.

Example motion stabilization modeling algorithms according to various embodiments of the present disclosure may be used in a plurality of domains and/or applications such as, but not limited to, consumer electronics, military products, exercise equipment, automotive and more. Example motion stabilization modeling algorithms according to various embodiments of the present disclosure improves usability for various diverse users including, but not limited to, older individuals, individuals with disabilities, and/or other individuals. Example motion stabilization algorithms according to embodiments of the present disclosure incorporates adaptive artificial intelligence (AI) for use mode, touch prediction, and/or facial tracking. Example motion stabilization algorithms according to embodiments of the present disclosure may be configured to utilize low or very low Central Processing Unit (CPU) usage. Further example motion stabilization algorithms according to embodiments of the present disclosure may be configured to utilize accelerometers, gyroscopic sensors and cameras within a smart device or other device.

Example embodiments provide a motion stabilization SDK that includes pre-built libraries, tools, and frameworks that speeds up motions the development process for motion stabilization applications, which allows for developers to build and improve features relating to motion stabilization and reduces resource usage (e.g., including computing resources and developer effort and time). In some example embodiments, the motion stabilization SDK includes techniques and/or mechanisms designed to ensure motion stabilization applications built using the motion stabilization SDK follows consistent standards and practices, which provides uniform performance and behavior across different applications and devices. In some example embodiments, the motion stabilization SDK includes debugging tools, testing frameworks, and benchmark tools designed to facilitate creation of high-quality and reliable motion stabilization applications, which improves quality and reliability or such applications.

In some example embodiments the motion stabilization SDK is configured to provide access to advanced features and hardware capabilities which enables, facilitates, and supports creation (e.g., by developers) of motion stabilization applications with enhanced functionalities and that are more sophisticated and feature-rich. In some embodiments, the motion stabilization SDK includes development, support, and troubleshooting guidelines or tools, which reduces development time and effort and provides cost efficiency. In some embodiments, the motion stabilization SDK is configured to facilitate seamless integration of motion stabilization applications with existing systems, which ensures that newly created features work well with applicable hardware and other software components.

In some embodiments, the motion stabilization SDK that abstracts complex hardware interactions, allowing developers to access and utilize hardware features like sensors, displays, and communication interfaces with minimal to no hardware knowledge. In this regard example embodiments provide access to hardware capabilities. In some embodiments, the motion stabilization SDK is configured to provide access to robust support system and facilitates developer interaction across various domains and geographic region, thus providing shared knowledge base, forums, and troubleshooting resources. In some embodiments, the motion stabilization SDK comprises a robust and tested/validated motion stabilization SDK framework, which allows for additional features to be added and configured to support additional and new devices in the future, thus providing scalability.

In some embodiments, the motion stabilization SDK includes security features and protocols configured to provide for developers to build secure applications and protect user data. In some embodiments, the motion stabilization SDK provides for improved user experience by providing various tools and guidelines that may be leveraged (e.g., by developers) to create more intuitive and user-friendly interfaces, thus, enhancing the overall user experience. In some embodiments, the motion stabilization SDK is configured to provides for faster updates and maintenance of motion stabilization applications such that developers can quickly integrate new features or security updates provided by the motion stabilization SDK. In some embodiments, the motion stabilization SDK is configured to provide for faster deployment of new features and improvements, ensuring that motion stabilization applications built using the motion stabilization SDK stay ahead in the rapidly evolving technology landscape, thus, providing a competitive edge for users and promoting innovation.

Example embodiments provide motion stabilization software development kits that abstracts all the complexity of the hardware details from the user, aggregates all the sensor data in an easy-to-use format and enables developers to quickly develop applications software without becoming domain experts in the various layers of any operating system. Accordingly, example embodiments, provide motion stabilization software development kits that facilitates and enables efficient deployment of updates, improvements, and additional features related to motion stabilization modeling algorithms, which, in turn, ensures software that applications stay ahead in the rapidly evolving technological landscape.

Example embodiments provide a motion stabilization software development kit framework that includes extensible object model providing bidirectional communication with a motion stabilization algorithm. Example motion stabilization software development kit according to embodiments of the present disclosure may comprise a set of software development tools including application programming interface(s) (API's) that allow developers (e.g., software developers, application developers, and/or the like) to create applications, software, or frameworks for a specific platform or system. Example motion stabilization software development kit according to embodiments of the present disclosure may be configured to enable developers (e.g., third-party developers and/or the like) to develop and integrate various elements with their product and extend the capability that a motion stabilization software development kit delivers.

In this regard, embodiments of the present disclosure provide various technical advantages and benefits and improves various technologies and technical fields, including the technical field of software development kits, motion stabilization systems and technologies such as display devices.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like

### System Architecture

Embodiments of the present disclosure may be implemented in various ways, including as computer program products that comprise articles of manufacture, as hardware, including circuitry, configured to perform one or more functions, and/or as combinations of specific hardware and computer program products. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid-state drive (SSD), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as one or more methods, apparatuses, systems, computing devices (e.g., user devices, servers, etc.), computing entities, and/or the like. As such, embodiments of the present disclosure may take the form of an apparatus, system, computing device, computing entity, and/or the like executing instructions stored on one or more computer-readable storage mediums (e.g., via the aforementioned software components and computer program products) to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams, flowchart illustrations, and other example visualizations. It should be understood that each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. In embodiments in which specific hardware is described, it is understood that such specific hardware is one example embodiment and may work in conjunction with one or more apparatuses or as a single apparatus or combination of a smaller number of apparatuses consistent with the foregoing according to the various examples described herein. Accordingly, the block diagrams and flowchart illustrations support various combinations of embodiments for performing the specified instructions, operations, or steps.

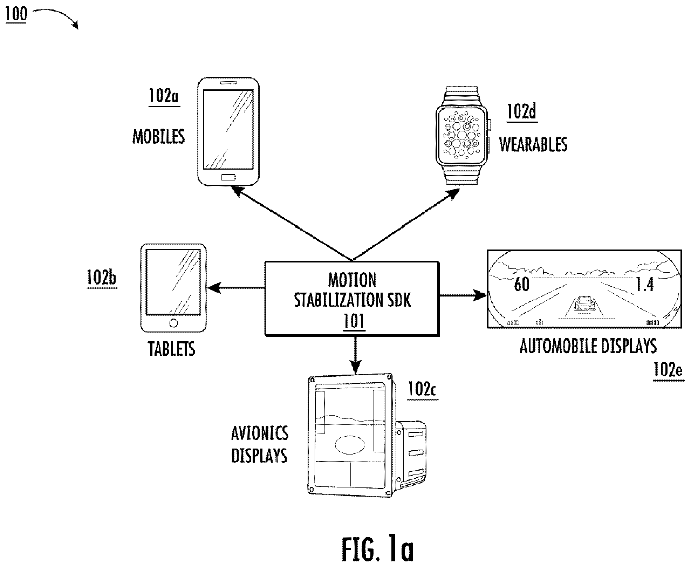

In this regard, FIG. 1A shows an example system environment 100 within which at least some embodiments of the present disclosure may operate. The depiction of the example system environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG 1A and the system environment 100 disclosed therein is merely presented to provide an example basis and context for the facilitation of some of the features, aspects, and uses of the methods, apparatuses, computer readable media, and computer program products disclosed and contemplated herein.

It will be understood that while many of the aspects and components presented in FIG 1A are shown as discrete, separate elements, other configurations may be used in connection with the methods, apparatuses, computer readable media, and computer programs described herein, including configurations that combine, omit, separate, and/or add aspects and/or components. For example, in some embodiments, the functions of one or more of the illustrated components in FIG. 1A may be performed by a single computing device or by multiple computing devices, which devices may be local or cloud based.

As shown in FIG. 1A, the example system environment 100 includes a motion stabilization software development kit 101 and at least one user device such as for example any of user devices 102a-e illustrated in FIG. 1A. Such user devices 102a-e may comprise display devices as described herein. In various embodiments, the motion stabilization software development kit 101 is configured to communicate with a user device or one or more components of the user device. In some embodiments, the motion stabilization software development kit 101 may be embodied by or otherwise integrated with the user device. In some embodiments, the term user device and display device refer a physical electronic device that includes a display and that may be used by a user for any of a variety of purposes including, but not limited to, displaying media content containing one or more images. In some embodiments, such "display" (noun) included in a display device/user device is a visual output component of the display device/user device that may be used to visually display content including, but not limited to visual media content, a captured image or other portion of visual media content, and/or an application (e.g., visual media content application or related application, including web pages and the like). In some embodiments, "displaying" or "display" (verb, gerund, etc.) may refer to the action performed by such displays. In some embodiments, a display device/user device includes a tablet computer, a smartphone, a laptop computer, any other mobile device with a display (e.g., a screen), an avionics display devices such as an electronic flight bag, a primary flight display device, a heads down display (HDD), wearables, and/or the like. Such devices may include displays such as, for example, display/screen of mobile device, display/screen of a tablet, avionics display/screen, automobile display/screen, display/screen of wearables, and/or the like. In some embodiments, a display device/user device includes at least one input interface for receiving user input. Non-limiting examples of such input interface include keyboard, mouse, and/or the like. In some embodiments, the display device is a touch screen device having at least one touch screen display.

In some embodiments, the motion stabilization development kit may be configured to communicate with one or more components of the user devices/display devices (e.g., such as user device 102a-e) via one or more communication mechanisms, including wired or wireless connections, such as over a network, bus, or similar connection. For example, a network may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the network may include a cellular telephone, an 802.11, 802.16, 802.20, and/or WiMAX network. Further, a network may include a public network, such as the Internet, a private network, such as an intranet, or combinations thereof, and may utilize a variety of networking protocols now available or later developed including, but not limited to TCP/IP based networking protocols. In some embodiments, one or more APIs may be leveraged to communicate with and/or facilitate communication between the motion stabilization software development kit 101 and the one or more of the components of the user device.

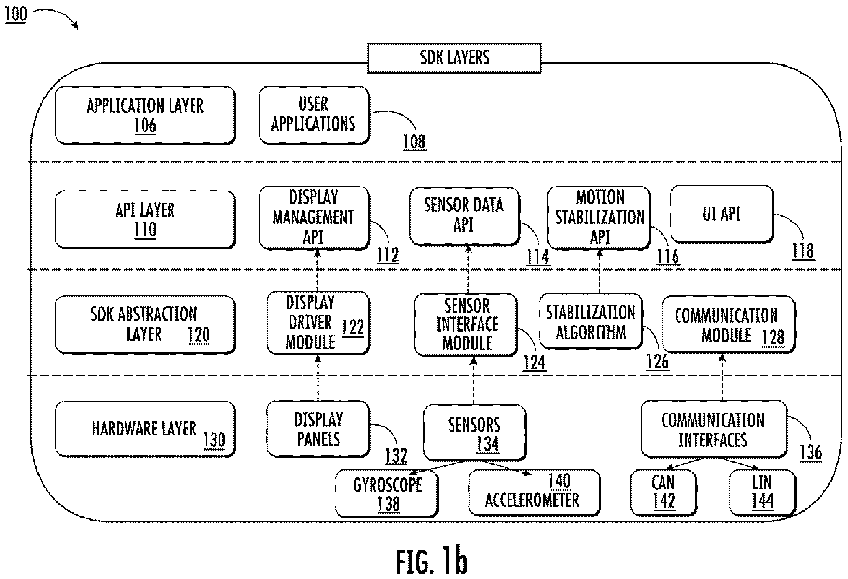

FIG. 1B shows an example motion stabilization software development kit 101 in accordance with at least some example embodiments of the present disclosure. Specifically FIG. 1b shows an example framework of motion stabilization software development kit 101.

The motion stabilization software development kit 101comprises a set of components (e.g., including software tools and programs) configured for building motion stabilization applications to implement motion stabilization in display devices, such as display devices in a vehicle (e.g., when the vehicle is in motion). In some embodiments, the motion stabilization software development kit 101 comprises a software development kit architecture having various layers each including a subset of the software components of the motion stabilization software development kit 101. In some embodiments, the components are connected via interfaces and/or other mechanisms. In some embodiments, the motion stabilization software development kit 101 (e.g., one or more components thereof) provides a set of rules and recommendations on how to write or otherwise build motion stabilization software applications (and/or software modules thereof). In some embodiments, the software development kit architecture is a modular software framework.

As shown in FIG. 1B, the motion stabilization software development kit 101 includes one or more layers and associated components thereof. The depiction of the example motion stabilization software development kit 101 is not intended to limit or otherwise confine the embodiments described and contemplated herein to any particular configuration of components or systems, nor is it intended to exclude any alternative configurations or framework. The components of the example motion stabilization software development kit 101may be configured to provide services and/or may be configured to consume services provided by other components. For example, in some embodiments, the motion stabilization software development kit 101 may omit one or more layers, may include one or more additional layers, and/or one or more layers may be associated with the motion stabilization software development kit 101 but not internal with respect to the motion stabilization software development kit 101.

As shown in FIG. 1B, the example motion stabilization software development kit 101 includes an application layer 106, an API layer 110, a software development kit abstraction layer 120, and/or a hardware layer 130. In various embodiments, the application layer 106 includes one or more user applications 108. In various embodiments, the API layer 110 includes a display management API 112, a sensor data API, a motion stabilization API 116, and/or a user interface (UI) API 118.

In various embodiments, the software development kit abstraction layer 120 includes one or more hardware abstraction modules. In various embodiments the one or more hardware abstraction modules include a display driver module 122, a sensor interface module 124, a motion stabilization algorithm 126, and/or a communication module 128.

In various embodiments, the hardware layer 130 includes one or more hardware including, but not limited to, display panels 132, one or more sensors 134, and/or one or more communication interfaces 136. The one or more sensors 134 may include a gyroscope 138, accelerometer 140, and/or other sensors. The one or more communication interfaces may comprise a controller area network (CAN) 142, a local area network (LIN) 144, and/or other networks. In some embodiments, the hardware layer 130 and/or one or more components of the hardware layer may be external to the motion stabilization software development kit 101.

The application layer 106 may be configured to host or otherwise embody the end-user applications (e.g., one or more user applications 108). The one or more applications 108 may be configured to use one or more of the APIs provided by the SDK to interact or otherwise communicate with the hardware (e.g., display panels 132, sensor(s) 134, and/or communication interface(s) 136). For example, the one or more applications 108 may leverage one or more of the display management API 112, sensor data API, motion stabilization API 116, or a user interface API 118 to interact or otherwise communicate with the hardware. The one or more user applications 108 may comprise any of various types of applications such as, but not limited to, kernels, mobile operating systems, user interface applications, and/or the like. In some embodiments, the terms "application," "software application," "app," "computer program," "service," or similar terms refer to a computer program or group of computer programs designed to perform coordinated functions, tasks, or activities. Such computer programs may be operated by or for the benefit of a user or group of users. An application may be configured to provide access to one or more services provided by an entity. An application may run on a server or group of servers, such as, but not limited to, web servers and application servers. In some embodiments, an application may be run on or across one or more other computing devices (e.g., user devices/display device). For example, an application may be configured to be accessed via a web browser, a dedicated client running on a user device/display device, and/or the like. In some examples, an application may be configured for use by and interaction with one or more local, networked or remote computing devices.

The display management API 112 may be configured to provide one or more functions associated with motion stabilization including functions such as controlling display settings and rendering content (e.g., visual media content) for display on the device display.

The motion stabilization API 116 may be configured to provide one or more functions associated with motion stabilization including functions such as handling and/or processing motion data, stabilizing the device display, and/or other functions of the motion stabilization algorithm. The sensor data API 114 may be configured to provide or otherwise allow access to sensor data such as data measured and/or output by an accelerometer 140, gyroscope 138, and/or other sensors The user Interface API 118 may be configured to provide one or more functions associated with building and/or managing a user interface associated with the device. For example, the user Interface API 118 may be configured to provide one or more tools for building and/or managing a user interface.

In various embodiments, an example motion stabilization algorithm according to some embodiments of the present disclosure is configured for providing motion stabilization to a display device associated with a vehicle. For example, in various embodiments, an example motion stabilization algorithm 126 according to some embodiments of the present disclosure is configured for estimating an acceleration motion and/or angular motion of an eye of the reader, estimating a position change of an eye gaze on a screen of the display based on the estimated acceleration motion and/or angular motion of the eye and eye motion due to VOR, estimating a position change of the display based on the detected acceleration motion and/or angular motion of the display, and adjusting the position of an object in a display to account for the estimated position change of the eye gaze and the estimated position change of the display to allow the eye gaze to remain fixed on the object.

In some example embodiments, the motion stabilization algorithm is associated with, includes, and/or an eye angular VOR motion prediction model and/or eye angular position tracking model to estimate the position change of a gaze of the user's eye on a screen of the display. For example, the eye angular VOR motion prediction model may be configured for generating a predicted eye position due to VOR effects and the eye angular position tracking model may be configured for correcting the predicted eye position after head motion has subsided.

The hardware abstraction modules of the software development kit abstraction layer 120 may be configured to abstract the details of the hardware (e.g., display panels 132, sensor(s) 134, and/or communication interface(s) 136) to provide a uniform interface for the APIs. The display driver module 122 may be configured to manage communication with display hardware (e.g., display panel(s) 132 or the like). The sensor interface module 124 may be configured to facilitate and/or perform data acquisition from one or more of the sensor(s) 134 (e.g., gyroscope 138, accelerometer 140, and/or other sensors). The communication module 128 may be configured to facilitate, perform, or otherwise manage communication protocols (e.g., CAN communication protocols, LIN communication protocols, or the like) used by the hardware (e.g., display panels 132, sensor(s) 134, and/or communication interface(s) 136). In some embodiments, the sensor interface module is configured to receive the device motion data from one or more sensors and (iii) provide the device motion data and the vehicle motion data, directly or indirectly, to the motion stabilization algorithm and/or provide, directly or indirectly, one or more of the device motion data or vehicle motion data for rendering on a user interface, such as motion stabilization user interface 200 and/or data visualization user interface 300.

The display panels 132, sensor(s) 134, communication interface(s) 136, and/or other hardware associated with the device may be configured to interact or otherwise communicate with the motion stabilization software development kit via the hardware layer 130. For example, the display panels 132, sensor(s) 134, communication interface(s) 136, and/or other hardware associated with the device may interact or otherwise communicate with the motion stabilization software development kit through the hardware layer 130. According to various embodiments, the example motion stabilization software development kit 101 and/or the configuration thereof allows for developers to create applications without the need to understand the intricate details of the hardware, making the development process more efficient and standardized. For example, the example motion stabilization software development kit 101 and/or the configuration thereof may be configured such that it ensures that developers can create applications without the need to understand the intricate details of the hardware, which as noted above, makes the development process more efficient and standardized.

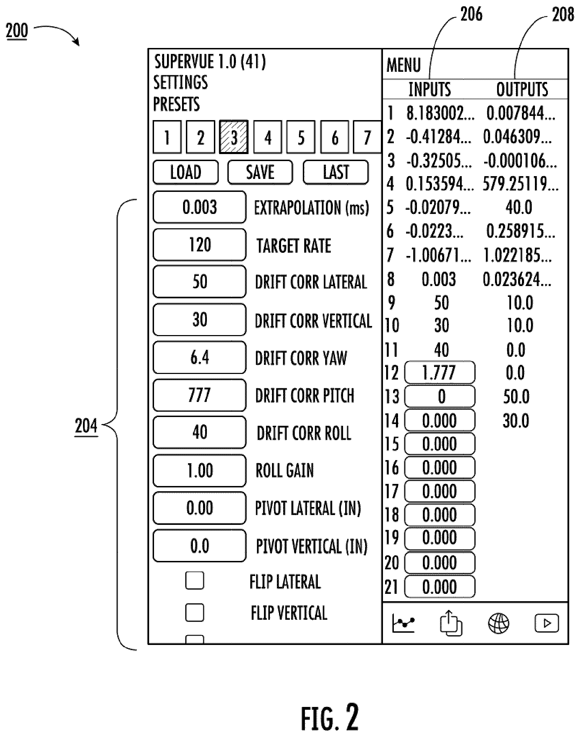

FIG. 2 provides an example motion stabilization user interface 200 in accordance with at least one example embodiment of the present disclosure. In various embodiments, various motion stabilization parameters associated with motion stabilization are fine-tuned for a given display device to achieve the motion stability service provided by the example motion stabilization software development kit 101. Such motion stabilization parameters or portion thereof may be associated with the motion stabilization algorithm 126 and/or leveraged by the motion stabilization algorithm 126 to perform motion stabilization operation configured to account for screen motion and eye motion relative to each other in a high movement environment (such as a vehicle in motion) as well as human vestibulo-ocular reflex (VOR), which is a human body and vision system coupling characteristic. For example, the motion stabilization parameters or portion thereof may comprise input variables defined by the motion stabilization algorithm 126. Non-limiting example of such motion stabilization parameters include extrapolation, target rate, drift correction rate, drift correction vertical, drift correction yaw, drift correction pitch, drift correction roll, roll gain, pivot lateral, pivot vertical, flip lateral, flip vertical, and/or the like.

In various embodiments, the motion stabilization software development kit 101 provides one or more APIs configured to enable visualization of motion data. (e.g., including one or more motion stabilization parameters, metadata, and/or other data). In various embodiments, the motion data may be rendered on a user interface, such as motion stabilization user interface 200 which may be associated with the API layer 110.

In some embodiments, the motion stabilization user interface 200 is an electronic interface (e.g., graphical user interface) of a computing device. The motion stabilization user interface may be configured for presenting or otherwise displaying a motion data user interface component comprising motion data. In some embodiments, the motion data comprises input data 206, In some embodiments, input data 206 includes one or more items of data (e.g., values, scores, metrics, and/or the like ) for one or more motion stabilization parameters 204. Additionally, in some embodiments, the motion data may include output data 208. In some embodiments, the output data 208 may comprise output of the motion stabilization algorithm 126 in response to applying the input data 206 to the motion stabilization algorithm 126 or otherwise to a motion stabilization model that includes and/or defines the motion stabilization algorithm 126. For example, in some embodiments, a motion stabilization model may comprise the motion stabilization algorithm 126 and may be executed to generate output data 208 in response to applying the input data 206 to the motion stabilization model. In this regard, in some embodiments, the motion stabilization software development kit 101 includes such motion stabilization models (e.g., at the SDK abstraction layer 120).

In some embodiments, the motion stabilization model is a machine learning model (e.g., a data entity that describes parameters, hyper-parameters, and/or defined operations of a rules-based algorithm, machine learning model (e.g., model including at least one or more rule-based layers, one or more layers that depend on trained parameters, coefficients, and/or the like), and/or artificial intelligence model, and/or the like). In some embodiments, the motion stabilization model may include any type of model configured, trained, and/or the like to perform one or more operations and/or tasks related to and/or to support motion stabilization, such as, for example, generating predicted gaze position deviation data, generating predicted eye position deviation data, generating predicted eye motion data, and/or the like. In this regard, a motion stabilization model may be configured to utilize one or more of any types of machine learning, rules-based, and/or artificial intelligence techniques including one or more of, supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the motion stabilization model includes model stabilization algorithm as described herein. In some embodiments, motion stabilization algorithm includes angular VOR motion prediction algorithm and/or eye angular VOR motion prediction algorithm. In some embodiments, the motion stabilization model may represent a motion stabilization model framework that includes two or more models such as for example VOR motion prediction model (e.g., comprising VOR motion prediction algorithm) and/or eye angular VOR motion prediction model (e.g., comprising eye angular VOR motion prediction algorithm).

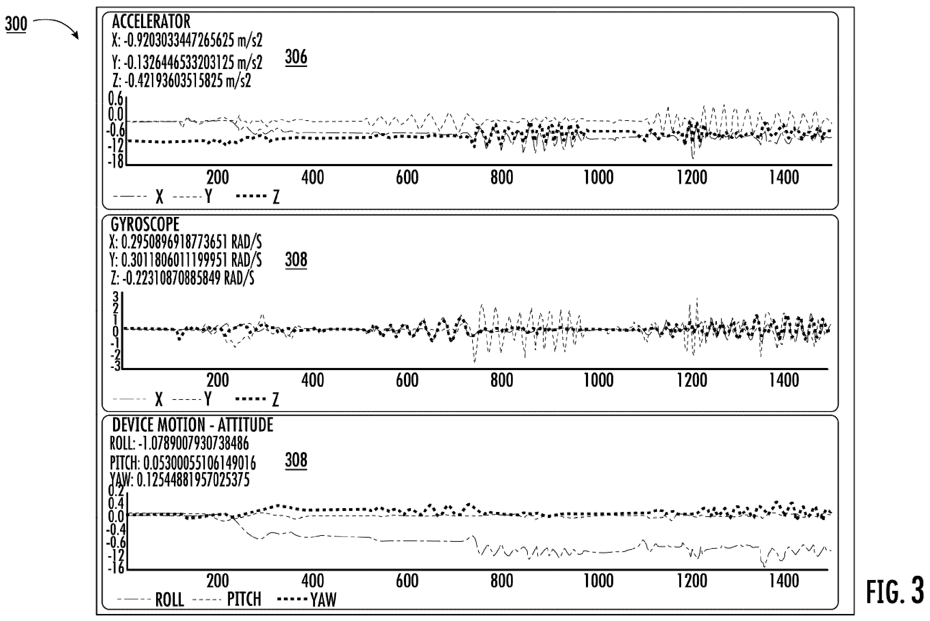

FIG. 3 provides an example data visualization user interface 300 in accordance with at least one example embodiment of the present disclosure. In various embodiments, the motion stabilization software development kit 101 provides one or more user interfaces, such as data visualization user interface 300, to visualize various data associated with one or more hardware including, but not limited to, sensor data from the one or more sensors 134, data derived from the sensor data, and/or data obtained via other measurement devices. Such data (e.g., sensor data) may represent motion data, as described above. Examples of such sensors include accelerometers, gyroscopes, GPS, and/or the like. In some embodiments, the one or more sensors (or a portion thereof) is associated with or otherwise embodied by the vehicle and/or display device. In some embodiments, the one or more sensors (or a portion thereof) is associated with or otherwise embodied by a vehicle within which the display device is located or otherwise associated with the display device. For example, in some embodiments, one or more inertial measurement units associated with a display device and/or one or more inertial measurement units associated with the vehicle in which the display device is located may include at least a portion of the one or more sensors.

As shown in FIG. 3, in some embodiments, the sensor data rendered on the user interface 300 may include acceleration data 306 measured and/or output by an accelerometer such as accelerometer 140, gyroscope data 308 measured and/or output by a gyroscope such as gyroscope 138, device motion data (e.g., roll, pitch yaw, and/or the like), and/or other sensor data. As shown in FIG. 3, the sensor data rendered may be include numerical representations, timeseries data, and/or other representations of the sensor data.

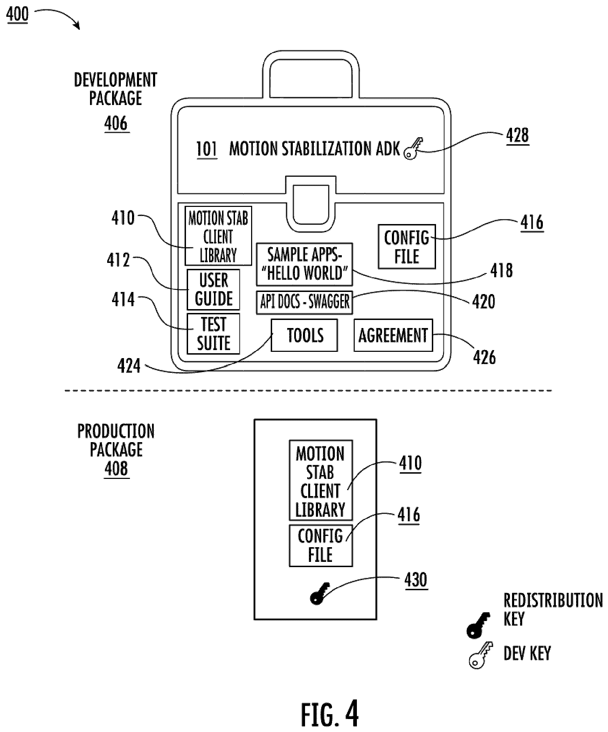

FIG. 4 provides an example block diagram of an example motion stabilization software development kit package 400 in accordance with at least one example embodiment of the present disclosure. In particular, FIG. 4 provides an example block diagram of an example motion stabilization software development kit package 400 that comprises a motion stabilization software development kit 101 (as described above). As shown in FIG. 4, the motion stabilization software development kit package 400 may comprise a development package 406 and/or production package 408. The development package 406 may include a motion stabilization client library 410, user guide 412, configuration file 416, sample application 418, API documentation 420, one or more tools 424, a test suite 414, an agreement 426, and a development key 428. In some embodiments, the development package 406 may include a simulator. The production package 408 may include motion stabilization client library 410, configuration file 416, and/or redistribution key 430.

The example motion stabilization software development kit 101 may be configured to provide an extensible object model towards externalizing the multitude and complex sub system real time data. In some embodiments, the motion stabilization software development kit 101 provides for multiple features related to motion stabilization may be built (e.g., by a developer) using, for example, "Plug & Play "concept along with the extensible object model across multitude domain systems without the need for the developer to understand low-level details related to implementation of motion stabilization and/or domain knowledge of the resources used. In some embodiments, the motion stabilization software development kit 101 provides developers (e.g., application developers) easy to use abstracted access to various features including, but not limited to secure interface with cloud services, bidirectional communication with onboard sensors (e.g., inertial measure unit, gyroscope, accelerometer, or the like), manages licensing and subscriptions, data logging , and/or the like

The example motion stabilization software development kit 101 may be utilized in any of a plurality of domains and/or by various entities and or users. Non-limiting examples of such entities and/or users include application developers, original equipment manufacturers (OEMs) system integrators, third-party developers, quality assurance (QA) Engineers, Test Engineers, UI designers, UX designers, researchers, innovators, technical support teams, and/or the like.

Application developers, for example may use an example motion stabilization software development kit 101 to build, test, and deploy applications that run on vehicle or device displays. Such application build using example motion stabilization software development kit as described herein may be referred to as motion stabilization applications. The example motion stabilization software development kit 101 provides tools and libraries to streamline the development process. OEMs, such as companies that produce the vehicle or device hardware, may use an example motion stabilization software development kit 101 to integrate and optimize their systems to, for example, ensure that the software works seamlessly with the hardware.

System integrators, such as professionals that combine various subsystems into a cohesive whole may use the example motion stabilization software development kit 101 to ensure that different components and applications work together smoothly. Third-party developers, such as independent developers or companies may use example motion stabilization software development kit 101 to create additional features, applications, or enhancements for the vehicle or device displays.

QA and/or test engineers use the example motion stabilization software development kit 101 to test applications and ensure they meet quality standards. The example motion stabilization software development kit 101 provides tools for debugging, performance testing, and validation. UI and/or UX Designers may use the example motion stabilization software development kit 101 to design intuitive and efficient user interfaces that interact with the underlying hardware and software components. researchers and/or innovators may use the example motion stabilization software development kit 101 to, for example, experiment with new technologies and features, pushing the boundaries of what the displays can do.

Technical support teams may use example motion stabilization software development kit 101 to troubleshoot issues, provide support, and ensure that applications run smoothly on the hardware.

The motion stabilization client library 410 may be configured to enable motion stabilization APIs to integrate with the application user interface. The user guide 412 may comprise developer document configured to help developers in the end-to-end lifecycle of application development using the client components. The sample application 418 (e.g., Sample "Hello World" application or the like) may be configured to enable a user (e.g., developer to visualize the capabilities of the motion stabilization software development kit). For example, the sample application 418 may comprise or otherwise represent a demo application.

The API documentation 420 may comprise an API Schema documentation (e.g., using tools like Swagger, or the like). The one or more tools 424 may comprise internal development tools for productivity and automation. The test suite 414 may comprise test suite and scenarios for enabling users (e.g., developers, customers, and/or the like) to execute the user's integration test cases. The agreement 426 may comprise application-level user and license agreement over the usage of the motion stabilization software development kit 101 capabilities (e.g., to mandate the controllable such as sharing of application identities) and/or other agreements.

The development key 428 may be a key associated with development. For example, the development key 428 may be configured strictly or primarily for development purposes with limited capabilities.

In some embodiments, the redistribution key 430 is a production key configured to provide access to the complete capabilities of the motion stabilization software development kit 101. For example, the redistribution key 430 may comprise a production key configured to be packaged in a final product to the user with full capabilities of the motion stabilization software development kit 101.

As described above, the motion stabilization software development kit 101 may be configured for integration with a display device and/or one or more applications (e.g., user application(s) or the like) associated with a vehicle and/or or a computing system associated with the vehicle to provide motion stabilization services that accounts for screen motion of the display device and eye motion of a user relative to each other in the vehicle. Non-limiting examples of such computing systems include aircraft systems (e.g., electronic flight bag systems or the like), automobile systems, and/or the like. Such computing systems may be embodied by or otherwise associated with a vehicle (e.g., aircraft, automobile, or the like). Further, such computing systems may include display devices. Non-limiting examples of such display devices includes a tablet computer, a smartphone, a laptop computer, any other mobile device with a screen (or otherwise a display), an avionics display devices such as an electronic flight bag, a primary flight display device, a heads down display (HDD), and/or the like. In some embodiments, the computing system comprises a motion stabilization software development kit such as the example motion stabilization software development kit 101. In some embodiments, the computing system may comprise one or more computing devices (e.g., server(s)). In some embodiments, the computing system comprises memory and one or more processors communicatively coupled to the memory, The one or more processors may be configured to perform various operations as described herein.

In some embodiments, an imaging system may be configured for generating and/or providing image data for display to a user (e.g., pilot, automobile driver, automobile passenger, aircraft passenger, or the like) via a display of such display device. Such image data may comprise one or more images, wherein an image may represent and/or comprise one or more objects. In some embodiments, the imaging system may be configured to generate a super buffer with an image that includes a display field (having a field of view (FOV)) and a scene field to be displayed on the display device. In some embodiments, the super buffer may be any type of volatile media, non-volatile media, or combination thereof. In some embodiments, the imaging system and the display device may be embodied by single device. In some embodiments, the imaging system and the display device may be embodied by different devices.

In various embodiments, the imaging system is configured to receive image inputs from an image sensor and generate a scene with real-time video to be displayed on the display device. In some embodiments, the imaging system may generate synthetic imagery (e.g., conformal and/or non-conformal) to overlay the real-time video. Alternatively or additionally, in various embodiments, the imaging system may generate a graphical user interface (GUI) overlay to overlay the real-time video. In some the imaging system may be configured to generate a super buffer that includes a display field and a scene field. The image sensor may comprise one or more video cameras, Lidar, millimeter wave (MMW), Radar, and/or the like. The display device may comprise a tablet computer display, a smartphone display, a laptop computer display, any other mobile device with a screen, an avionics display such as an electronic flight bag, a primary flight display, a heads down display (HDD), and/or the like.

In various embodiments, the imaging system may be configured to receive inertial inputs from an inertial measurement unit (IMU). For example, the imaging system may be configured to receive inertial inputs from one or more IMUs .The inertial inputs may comprise acceleration motion data, angular motion data, and/or the like. For example, the imaging system may receive acceleration motion data from accelerometers. As another example, the imaging system may receive angular motion data from gyroscopes. In various embodiments, the imaging system may be configured to receive motion/position inputs from other motion/position sensors such as, for example, a global positioning system (GPS). In various embodiments, the vehicle includes or is otherwise associated with such accelerometers, gryroscopes, and/or other motion/position sensors. In various embodiments, such accelerometers, gryroscopes, and/or other motion/position sensors are associated with the imaging system. In various embodiments, the imaging system, image sensor, IMU, and/or display device may be part of a single system or device such as, for example, a tablet computer, smartphone, laptop computer, or other mobile device. In various embodiments, the imaging system, image sensor, IMU, and/or display device may be part of a single system that is fixed to the vehicle, such as a cockpit display of an aircraft. In various embodiments, the imaging system may be configured to sense touch detection events within touch zones in a display/screen of a display device.

In various embodiments, the motion stabilization software development kit 101 (e.g., one or more components thereof) is configured to interact with the imaging system or component(s) associated with the imaging system to process image(s) (e.g., image data) output by the imaging system to account for screen motion and eye motion relative to each other in a high movement environment (such as moving vehicle) and/or as human vestibulo-ocular reflex (VOR). For example, in various embodiments, the motion stabilization software development kit 101 (e.g., using one or more components thereof) is configured to perform motion stabilization, according to techniques described herein, on the image data output by the imaging system.

For example, the motion stabilization software development kit 101 (e.g., one or more components thereof) may be configured adjust the position of the scene field within the display field of the super buffer generated by the imaging system, such that the scene displayed on the display device is adjusted to account for estimated position change of an eye gaze (e.g., of the user) and the estimated position change of the display device.

In various embodiments, the computing system (as described above) is configured to receive a first image (e.g., first image data) for display on the display device. In some embodiments, the first image is received from the imaging system. In various embodiments, one or more sensors of the motion stabilization software development kit 101 is configured to detect (e.g., sense, determine, or the like) acceleration motion and/or angular motion (e.g., azimuth, elevation, and roll) of the display device. For example, a first set of one or more sensors associated with the motion stabilization software development kit 101 may be configured for generating device motion data for the display device. In some embodiments, the device motion data includes acceleration motion and/or angular motion of the display device.

In various embodiments, the computing system (via a portion of the one or more sensors associated with the motion stabilization software development kit 101) is configured to detect the acceleration motion in an X, Y, Z axis and/or angular motion (e.g., azimuth, elevation, and roll) of the display device. In some embodiments, the computing system (via the one or more sensors associated with the motion stabilization software development kit 101) is configured to detect the acceleration motion and/or angular motion of the display device based on one or more display IMUs and/or other devices associated with the display device. The display IMUs, for example, may include the first set of one or more sensors.

In some embodiments, the computing system is configured to receive (using the sensor interface module 124) device acceleration motion data from the one or more display IMUs and/or other devices associated with the display device, wherein the device acceleration motion data comprises one or more items of data representative and/or indicative of acceleration motion of the display device (e.g., device acceleration motion). Alternatively or additionally, in some embodiments, the computing system (using the sensor interface module 124 associated with the motion stabilization software development kit 101) is configured to receive device angular motion data from one or more display IMUs and/or other devices associated with the display device, wherein the device angular motion data comprises one or more items of data representative and/or indicative of angular motion of the display device (e.g., device angular motion). In this regard, in some embodiments, detecting the acceleration motion and/or angular motion of the display device may comprise receiving, from one or more display IMUs (e.g., one or more sensors thereof) and/or other devices associated with the display device, device motion data (e.g., device acceleration motion data and/or device angular motion data) representative and/or indicative of the acceleration motion and/or angular motion of the display device at a particular time. In some embodiments, acceleration motion is the movement of an object where the velocity is changing over time (e.g., rate of change of velocity). In this regard, in some embodiments, device acceleration motion is the movement of the display device where the velocity is changing over time. In some embodiments, angular motion is the movement of an object around a fixed axis or curved path. In some examples, such motion around a fixed axis or curved path is at a constant angular velocity. In this regard, in some embodiments, device angular motion is the motion of the display device around a fixed axis or curved path.

In various embodiments, the computing system (via a portion of the one or more sensors associated with the motion stabilization software development kit 101) is configured to detect (e.g., sense, determine, or the like) acceleration motion of the vehicle in which the display device and/or user associated with the display device is located. The user, for example, may be an individual/person viewing the screen of the display device (e.g., viewing image data rendered on the display device). For example, a second set of one or more sensors associated with the motion stabilization software development kit 101 may be configured for generating vehicle motion data for the vehicle. In some embodiments, the vehicle motion data includes acceleration motion and/or angular motion of the display device.

In various embodiments, the computing system (via a portion of the one or more sensors associated with the motion stabilization software development kit 101) is configured to detect the acceleration motion in an X, Y, Z axis and/or angular motion (e.g., azimuth, elevation, and roll) of the vehicle. In some embodiments, the computing system (via a portion of the one or more sensors associated with the motion stabilization software development kit 101) is configured to detect the acceleration motion and/or angular motion of the vehicle device based on one or more vehicle IMUs and/or other devices associated with the vehicle. The one or more vehicle IMUs, for example, may include or otherwise associated with the second set of one or more sensors. In some embodiments, the computing system is configured to receive (using the sensor interface module 124) vehicle acceleration motion data from the one or more vehicle IMUs and/or other devices associated with the vehicle, wherein the vehicle acceleration motion data comprises one or more items of data representative and/or indicative of acceleration motion of the vehicle (e.g., vehicle acceleration motion). Alternatively or additionally, in some embodiments, the computing system is configured to receive vehicle angular motion data from one or more vehicle IMUs and/or other devices associated with the vehicle, wherein the vehicle angular motion data comprises one or more items of data representative and/or indicative of angular motion of the display device (e.g., vehicle angular motion). In this regard, in some embodiments, detecting the acceleration motion and/or angular motion of the vehicle may comprise receiving, from one or more display IMUs and/or other devices associated with the vehicle, vehicle motion data (e.g., vehicle acceleration motion data and/or vehicle angular motion data) representative and/or indicative of the acceleration motion and/or angular motion of the vehicle. In some embodiments, vehicle acceleration motion is the movement of the vehicle where the velocity is changing over time. In some embodiments, vehicle angular motion is the motion of the display device around a fixed axis or curved path.

In various embodiments, the computing system (using the motion stabilization algorithm 126 or otherwise a motion stabilization model comprising the motion stabilization algorithm 126) is configured to estimate, or otherwise determine, an acceleration motion and/or angular motion of an eye(s) of the user based on the detected acceleration motion and/or angular motion of the display device and/or the vehicle. In various embodiments, the computing system (using the motion stabilization algorithm 126 or otherwise a motion stabilization model comprising the motion stabilization algorithm 126) is configured to estimate a position change of a gaze of the user's eye (e.g., eye(s) of the user) on a screen of the display device based on the estimated acceleration motion and/or angular motion of the user's eye and/or eye motion due to VOR.

For example, the computing system (using the motion stabilization algorithm 126 or otherwise a motion stabilization model comprising the motion stabilization algorithm 126) may be configured to generate predicted eye motion data that comprises one or more items of data representative and/or indicative of estimated acceleration motion and/or angular motion of an eye of the user based on the detected acceleration motion and/or angular motion of the display device and the vehicle. In some embodiments, input data comprising one or more of detected acceleration motion of the display device, detected angular motion of the display device, detected acceleration motion of the vehicle, or detected angular motion of the vehicle is applied to the motion stabilization model configured to process the input data and output the predicted eye motion data comprising one or more items of data representative and/or indicative of estimated acceleration motion and/or angular motion of an eye(s) of the user. For example, in some embodiments, the input data comprises one or more of device acceleration motion data, device angular motion data, vehicle acceleration motion data, or vehicle angular motion data received from one or more IMUs (e.g., one or more sensors) or other devices as described above.

In various embodiments, the computing system (using the motion stabilization algorithm 126 or otherwise a motion stabilization model comprising the motion stabilization algorithm 126) is configured to estimate a position change of a gaze of the user's eye on a screen of the display device based on the estimated acceleration motion and/or angular motion of the user's eye and/or eye motion due to VOR. In some embodiments, the computing system (using the motion stabilization algorithm 126 or otherwise a motion stabilization model comprising the motion stabilization algorithm 126) leverages one or more models to estimate a position change of a gaze of the user's eye on the screen of the display device based on the estimated acceleration motion and/or angular motion of the user's eye. In some example embodiments, the computing leverages an eye angular VOR motion prediction model and/or eye angular position tracking model to estimate the position change of a gaze of the user's eye on a screen of the display device. The eye angular VOR motion prediction model and/or eye angular position tracking model may comprise components of the motion stabilization model comprising the motion stabilization algorithm. For example, the eye angular VOR motion prediction model may comprise eye angular VOR motion prediction algorithm and the eye angular position tracking model may comprise eye angular position tracking algorithm, such that the motion stabilization algorithm comprises eye angular VOR motion prediction algorithm and/or eye angular position tracking algorithm.

In some example embodiments, predicted eye motion data is applied to an eye angular VOR motion prediction model and/or eye angular position tracking model to generate predicted gaze position deviation data that comprise one or more items of data representative and/or indicative of estimated position change of a gaze of the user's eye(s) on a screen of the display device. In some embodiments, the eye angular VOR motion prediction model is configured to generate a predicted eye position due to VOR effects. Additionally, in some embodiments, the eye angular position tracking model is configured to correct the predicted eye position after head motion has subsided. In some embodiments, the VOR motion prediction model is a mathematical model (e.g., VOR motion prediction mathematical model). Alternatively or additionally, in some embodiments, the VOR motion prediction model is a machine learning model. In some embodiments, the eye angular position tracking model is a mathematical model (e.g., eye angular position tracking mathematical model). Alternatively or additionally, in some embodiments, the eye angular position tracking model is a machine learning model.

In various embodiments, the computing system (using the motion stabilization algorithm 126 of the motion stabilization software development kit 101) is configured to estimate a position change of the display device based on the detected acceleration motion and/or angular motion of the display device. In some embodiments estimating a position change of the display device comprises applying the detected acceleration motion of the display device and detected angular motion of the display device to the motion stabilization model configured to generate predicted device position deviation data comprising one or more items of data representative and/or indicative of estimated position change of the display device.

In various embodiments, the computing system (using the motion stabilization algorithm 126 of the motion stabilization software development kit 101) is configured to adjust the position of an object on the screen of the display device to account for the estimated position change of the gaze of the eye and/or the estimated position change of the display device. The object, for example, may be the image configured for rendering on the display device or may comprise a part of the image. By adjusting the position of an object on the screen of the display device to account for the estimated position change of the gaze of the eye and/or the estimated position change of the display device, the motion stabilization algorithm 126 provides for or otherwise allows the gaze of the user's eye to remain fixed on the object.

In some embodiments, computing system (using one or more components of the motion stabilization software development kit 101) is configured to adjust the position of the object on the screen of the display device based on the estimated position change of the gaze of the eye and/or the estimated position change of the display device. For example, the motion stabilization software development kit 101 (e.g., one or more components thereof) may be configured or otherwise leveraged to adjust the position of an object on the screen of the display device based on the estimated position change of the gaze of the eye and/or the estimated position change of the display device to account for the estimated position change of the gaze of the eye and the estimated position change of the display device. By adjusting the position of an object on the screen of the display device to account for the estimated position change of the gaze of the eye and the estimated position change of the display device, example embodiments provide for or otherwise allows the gaze of the user's eye to remain fixed on the object.

In various embodiments, the motion stabilization software development kit 101 is configured to improve the legibility of a moving screen (e.g., moving screen of the display device) by moving the image in synchronization (e.g., in sync) with the user's gaze. In various embodiments, the motion stabilization software development kit 101 is configured to detect, sense, and/or the like the motion of the screen (e.g., based on the motion of the display device comprising the screen) and render an image which is an inverse of the detected motion. When displayed on the moving screen of the display device, the image is space stabilized to prevent motion and retina blur associated with moving electronic screens. Additionally, in various embodiments, the motion stabilization software development kit 101 is configured to re-map the touch zones on the screen based on the detected motion of the screen, such that the touch zones are space stabilized as well.

### Example Apparatuses of the Disclosure

Having discussed example systems in accordance with the present disclosure, example apparatuses in accordance with the present disclosure will now be described.

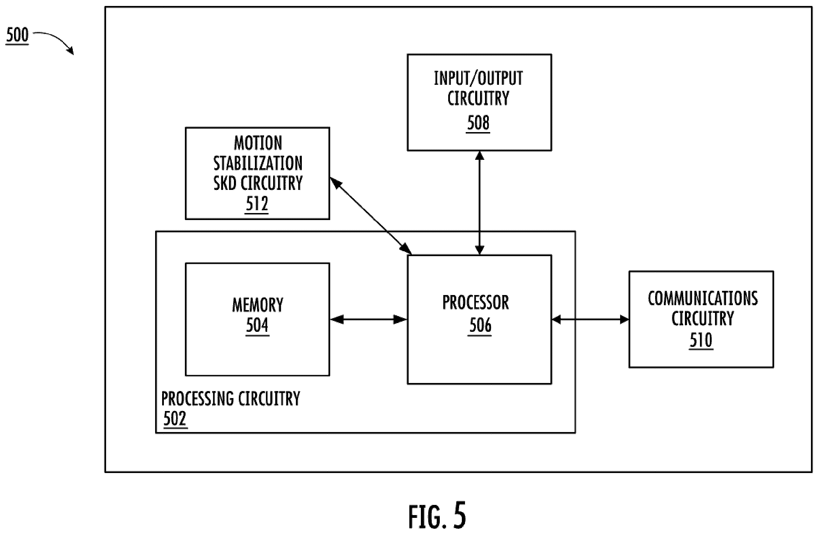

Figure 5 illustrates a block diagram of an apparatus 500 in accordance with some example embodiments. In some embodiments, the example motion stabilization software development kit 101, other components depicted in the system environment 100, or one or more portions thereof, may be embodied by one or more apparatuses 500. In some embodiments, a motion stabilization software development kit 101 may be implemented using the apparatus 500. As described above, in some embodiments, a computing system may include a motion stabilization software development kit 101. In some embodiments, one or more non-transitory computer-readable storage media may include a motion stabilization software development kit, such as motion stabilization software development kit 101.

In some embodiments, the apparatus 500 may include a processing circuity 502 as shown in FIG. 5. It should be noted, however, that the components, or elements illustrated in and described with respect to FIG. 5 below may not be mandatory and thus one or more may be omitted in certain embodiments. Additionally, some embodiments, may include further or different components or elements beyond those illustrated in and described with respect to FIG. 5. In some embodiments, the functionality of the motion stabilization software development kit 101, the other devices and/or systems interacting with the motion stabilization software development kit 101, or any subset thereof may be performed by a single apparatus 500 or multiple apparatuses 500. In some embodiments, the apparatus 500 may comprise one or a plurality of physical devices, including distributed, cloud-based, and/or local devices.

Although some components are described with respect to functional limitations, it should be understood that the particular implementations necessarily include the use of particular computing hardware, such as the hardware shown in FIG. 5. It should also be understood that certain of the components described herein may include similar or common hardware. For example, two sets of circuitries for example, may both leverage use of the same processor(s), network interface(s), storage medium(s), and/or the like, to perform their associated functions, such that duplicate hardware is not required for each set of circuitry and a single physical circuitry may be used to perform the functions of multiple circuitries described herein. The use of the term "circuitry" as used herein with respect to components of the apparatuses described herein should therefore be understood to include particular hardware configured to perform the functions associated with the particular circuitry as described herein.

In some embodiments, "circuitry" may include processing circuitry, storage media, network interfaces, input/output devices, and/or the like. In some embodiments, other elements of the apparatus 500 may provide or supplement the functionality of another particular set of circuitry. For example, the processor 506 in some embodiments provides processing functionality to any of the sets of circuitries, the memory 504 provides storage functionality to any of the sets of circuitry, the communications circuitry 510 provide network interface functionality to any of the sets of circuitry, and/or the like.

The apparatus 500 may include or otherwise be in communication with processing circuitry 502 that is configurable to perform actions in accordance with one or more example embodiments disclosed herein. In this regard, the processing circuitry 502 may be configured to perform and/or control performance of one or more functionalities of the apparatus 500 in accordance with various example embodiments, and thus may provide means for performing functionalities of the apparatus 500 in accordance with various example embodiments. The processing circuitry 502 may be configured to perform data processing, application, and function execution, and/or other processing and management services according to one or more example embodiments. In some embodiments, the apparatus 500 or a portion(s) or component(s) thereof, such as the processing circuitry 502, may be embodied as or comprise a chip or chip set. In other words, apparatus 500 or the processing circuitry 502 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 500 or the processing circuitry 502 may therefore, in some cases, be configured to implement an embodiment of the disclosure on a single chip or as a single "system on a chip." As such, in some cases, a chip or chipset may constitute means for performing one or more operations for providing the functionalities described herein.

In some embodiments, the processing circuitry 502 may include a processor 506 (and/or co-processor or any other processing circuitry assisting or otherwise associated with the processor) and, in some embodiments, such as that illustrated in FIG. 5, may further include memory 504. The processing circuitry 502 may be in communication with or otherwise control a user interface (e.g., embodied by input/output circuitry 508) and/or a communications circuitry 510. As such, the processing circuitry 502 may be embodied as a circuit chip (e.g., an integrated circuit chip) configured (e.g., with hardware, software or a combination of hardware and software) to perform operations described herein.

The processor 506 may be embodied in a number of different ways. For example, the processor 506 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 506 may comprise a plurality of processors. The plurality of processors may be in operative communication with each other and may be collectively configured to perform one or more functionalities of the apparatus 500 as described herein. In some example embodiments, the processor 506 may be configured to execute instructions stored in the memory 504 or otherwise accessible to the processor 506. As such, whether configured by hardware or by a combination of hardware and software, the processor 506 may represent an entity (e.g., physically embodied in circuitry - in the form of processing circuitry 502) capable of performing operations according to embodiments of the present disclosure while configured accordingly. Thus, for example, when the processor 506 is embodied as an ASIC, FPGA or the like, the processor 506 may be specifically configured hardware for conducting the operations described herein. Alternatively, as another example, when the processor 506 is embodied as an executor of software instructions, the instructions may specifically configure the processor 506 to perform one or more operations described herein. The use of the terms "processor" and "processing circuitry" may be understood to include a single core processor, a multi-core processor, multiple processors internal to the apparatus 500, and/or one or more remote or "cloud" processor(s) external to the apparatus 500.

In some example embodiments, the memory 504 may include one or more non-transitory memory devices such as, for example, volatile and/or non-volatile memory that may be either fixed or removable. In this regard, the memory 504 may comprise a non-transitory computer-readable storage medium. It will be appreciated that while the memory 504 is illustrated as a single memory, the memory 504 may comprise a plurality of memories. The memory 504 may be configured to store information, data, applications, instructions and/or the like for enabling the apparatus 500 to carry out various functions in accordance with one or more example embodiments. For example, the memory 504 may be configured to buffer input data for processing by the processor 506. Additionally or alternatively, the memory 504 may be configured to store instructions for execution by the processor 506. The memory 504 may include one or more databases that may store a variety of files, contents, or data sets. Among the contents of the memory 504, applications may be stored for execution by the processor 506 in order to carry out the functionality associated with each respective application. In some cases, the memory 504 may be in communication with one or more of the processors 506, input/output circuitry 508 and/or communications circuitry 510, via a bus(es) for passing information among components of the apparatus 500.

The input/output circuitry 508 may provide output to the user or an intermediary device and, in some embodiments, may receive one or more indication(s) of user input. In some embodiments, the input/output circuitry 508 is in communication with processor 506 to provide such functionality. The input/output circuitry 508 may include one or more user interface(s) and/or include a display that may comprise the user interface(s) rendered as a web user interface, an application interface, and/or the like, to the display of a user device, a backend system, or the like. The input/output circuitry 508 may be in communication with the processing circuitry 502 to receive an indication of a user input at the user interface and/or to provide an audible, visual, mechanical, or other output to the user. As such, the input/output circuitry 508 may include, for example, a keyboard, a mouse, a joystick, a display, a touch screen display, a microphone, a speaker, and/or other input/output mechanisms. As such, the input/output circuitry 508 may, in some example embodiments, provide means for a user to access and interact with the apparatus 500. The processor 506 and/or input/output circuitry 508 comprising or otherwise interacting with the processor 506 may be configured to control one or more functions of one or more user interface elements through computer program instructions (e.g., software and/or firmware) stored on a memory accessible to the processor 506 (e.g., stored on memory 504, and/or the like).

The communications circuitry 510 may include one or more interface mechanisms for enabling communication with other devices and/or networks. In some cases, the communications circuitry 510 may be any means such as a device or circuitry embodied in either hardware, or a combination of hardware and software that is configured to receive and/or transmit data from/to a network and/or any other device or module in communication with the processing circuitry 502. The communications circuitry 510 may, for example, include an antenna (or multiple antennas) and supporting hardware and/or software for enabling communications with a wireless communication network (e.g., a wireless local area network, cellular network, global positing system network, and/or the like) and/or a communication modem or other hardware/software for supporting communication via cable, digital subscriber line (DSL), universal serial bus (USB), Ethernet or other methods.

In some embodiments, the apparatus 500 includes a motion stabilization software kit development circuitry 512 which may include hardware components, software components, and/or a combination thereof configured to, with the processing circuitry 502, input/output circuitry 508 and/or communications circuitry 510, perform one or more functions associated with the motion stabilization software feature development kit and/or one or more components thereof (as described above with reference to FIGS. 1A and 1B). In some embodiments, the motion stabilization software kit development circuitry 512 may include hardware components, software components, and/or a combination thereof configured to, with the processing circuitry 502, input/output circuitry 508 and/or communications circuitry 510, perform one or more functions associated with implementing the motion stabilization software feature development kit such as, for example, executing an instance of the motion stabilization software feature development kit.

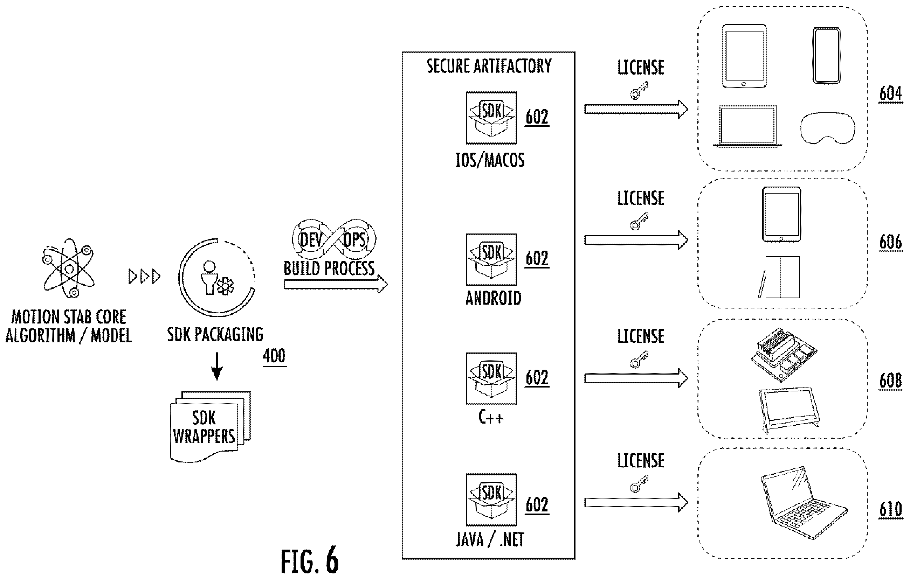

As shown in FIG. 6, the motion stabilization software development kit 101 (which may be embodied by a motion stabilization software development kit package 400) may be configured for use with a variety of devices (such as display devices 604-610 representing example user devices 102a-e) and across various operating systems 602, platforms, manufacturers, and/or environments. Non-limiting examples of such display devices 604-610 include, but is not limited to, tablet computers, laptop computers, augmented reality devices, smart phones, notepads, and/or the like. In various embodiments, the motion stabilization software development kit includes a motion stabilization model and metadata file, wherein a motion stabilization algorithm may be configured to function based upon the metadata or the motion stabilization model that has been supplied to it. In various embodiments, the metadata includes one or more various tunable parameters such as, gaze gain, roll angle, drift correction, and/or the like.

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A motion stabilization software development kit comprising:
a hardware layer comprising:
a first set of one or more sensors configured for generating device motion data for a display device within a vehicle; and
a second set of one or more sensors configured for generating vehicle motion data for the vehicle;
an API layer comprising one or more APIs;
an application layer comprising one or more applications, the application layer communicatively coupled to the first set of one or more sensors and the second set of one or more sensors via at least a portion of the one or more APIs; and
a software development kit abstraction layer comprising a motion stabilization model configured to adjust a position of an object on a screen of the display device based on the device motion data and the vehicle motion data to account for screen motion of the display device and eye motion of a user relative to each other in the vehicle.

2. The motion stabilization software development kit of claim 1, wherein the one or more applications comprise a user application, wherein the motion stabilization software development kit is configured for integration with the user applications to enable implementation of the motion stabilization model with respect to the user application.

3. The motion stabilization software development kit of claim 1, wherein the one or more APIs comprise a sensor data API and a motion stabilization API.

4. The motion stabilization software development kit of claim 3, wherein the software development kit abstraction layer further comprises:
a sensor interface module, wherein the sensor interface module is configured to (i) receive the device motion data from the first set of one or more sensors, (ii) receive the vehicle motion data from the second set of one or more sensors, and (iii) provide the device motion data and the vehicle motion data, directly or indirectly, to the motion stabilization model.

5. The motion stabilization software development kit of claim **1,** wherein the sensor interface module is further configured to provide, directly or indirectly, one or more of the device motion data or the vehicle motion data for rendering on a user interface.

6. The motion stabilization software development kit of claim **1,** wherein the first set of one or more sensors comprise one or more of an accelerometer or a gyroscope.

7. The motion stabilization software development kit of claim **1,** wherein the motion stabilization model is configured to adjust the position of the object on the screen of the display device by:
generating predicted gaze position deviation data based on the device motion data and vehicle motion data, wherein the predicted gaze position deviation data comprises estimated position change of a gaze of the eye of a user on the screen of the display device;
generating predicted device position deviation data based on the device motion data, wherein the predicted device position deviation data comprises estimated position change of the display device; and
adjusting the position of the object on the screen of the display device based on the predicted gaze position deviation data and the predicted device position deviation data.

8. The motion stabilization software development kit of claim **1,** wherein the device motion data comprises one or more of (i) device acceleration motion or (ii) device angular motion.

9. The motion stabilization software development kit of claim **1,** wherein the vehicle motion data comprises one or more of (i) vehicle acceleration motion or (ii) vehicle angular motion.

10. A computing system comprising a motion stabilization software development kit, the motion stabilization software development kit, comprising:
a hardware layer comprising:
a first set of one or more sensors configured for generating device motion data for a display device within a vehicle; and
a second set of one or more sensors configured for generating vehicle motion data for the vehicle;
an API layer comprising one or more APIs;
an application layer comprising one or more applications, the application layer communicatively coupled to the first set of one or more sensors and the second set of one or more sensors via at least a portion of the one or more APIs; and
a software development kit abstraction layer comprising a motion stabilization model configured to adjust a position of an object on a screen of the display device based on the device motion data and the vehicle motion data to account for screen motion of the display device and eye motion of a user relative to each other in the vehicle.

11. The computing system of claim 10, wherein the one or more applications comprise a user application, wherein the motion stabilization software development kit is configured for integration with the user application to enable implementation of the motion stabilization model with respect to the user application.

12. The computing system of claim 10, wherein the one or more APIs comprise a sensor data API and a motion stabilization API.

13. The computing system of claim 12, wherein the software development kit abstraction layer further comprises:
a sensor interface module, wherein the sensor interface module is configured to (i) receive the device motion data from the first set of one or more sensors, (ii) receive the vehicle motion data from the second set of one or more sensors, and (iii) provide the device motion data and the vehicle motion data, directly or indirectly, to the motion stabilization model.

14. The computing system of claim 10, wherein the sensor interface module is further configured to provide, directly or indirectly, one or more of the device motion data or the vehicle motion data for rendering on a user interface.

15. One or more non-transitory computer-readable storage media comprising a motion stabilization software development kit, the motion stabilization software development kit comprising:
a hardware layer comprising:
a first set of one or more sensors configured for generating device motion data for a display device within a vehicle; and
a second set of one or more sensors configured for generating vehicle motion data for the vehicle;
an API layer comprising one or more APIs;
an application layer comprising one or more applications, the application layer communicatively coupled to the first set of one or more sensors and the second set of one or more sensors via at least a portion of the one or more APIs; and
a software development kit abstraction layer comprising a motion stabilization model configured to adjust a position of an object on a screen of the display device based on the device motion data and the vehicle motion data to account for screen motion of the display device and eye motion of a user relative to each other in the vehicle.
